Europäisches Patentamt

European Patent Office

Office européen des brevets

(19)

(11) Publication number: **0 108 438**
**B1**

(12) # EUROPEAN PATENT SPECIFICATION

(45) Date of publication of patent specification: **20.11.86**

(51) Int. Cl.⁴: **C 10 G 47/20**

(21) Application number: **83201477.3**

(22) Date of filing: **14.10.83**

(54) Process for the conversion of hydrocarbon oils.

(30) Priority: **01.11.82 GB 8231167**

(43) Date of publication of application:
**16.05.84 Bulletin 84/20**

(45) Publication of the grant of the patent:
**20.11.86 Bulletin 86/47**

(84) Designated Contracting States:
**BE DE FR GB IT NL**

(56) References cited:
**GB-A-1 390 359**
**GB-A-1 493 620**
**US-A-4 330 395**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Janssen, Martinus Maria Petrus
Badhuisweg 3
NL-1031 CM Amsterdam (NL)**
Inventor: **Van der Linde, Berend Jacob
Badhuisweg 3
NL-1031 CM Amsterdam (NL)**
Inventor: **Maxwell, Ian Ernest
Badhuisweg 3
NL-1031 CM Amsterdam (NL)**
Inventor: **Pott, Gerard Tjarko
Badhuisweg 3
NL-1031 CM Amsterdam (NL)**

(74) Representative: **Aalbers, Onno et al
P.O. Box 302
NL-2501 CH The Hague (NL)**

Courier Press, Leamington Spa, England.

# 0 108 438

**Description**

The present invention relates to a process for converting hydrocarbon oils to middle distillates by contacting said oils at elevated temperature and pressure in the presence of hydrogen with a sulphided supported catalyst comprising nickel, tungsten and fluorine.

Such a process is known from GB—A—1,493,620 in which a two-stage process is disclosed for the preparation of gasoline and middle distillate by hydrocracking a hydrocarbon oil with a relatively high nitrogen content, using said catalyst in the first stage of the process.

Furthermore, GB—A—1,390,359 relates to a process for the preparation of lubricating oil with a high viscosity index by hydrocracking heavy hydrocarbons over an in-situ fluorided sulphided supported catalyst comprising nickel and also molybdenum and/or tungsten.

At present there is a need to process heavier feedstocks (e.g. blends of flashed distillates and residual fractions) in order to obtain valuable middle distillates in a greater yield from a given amount of crude oil than achieved by existing processes. Known hydrocracking catalysts for the preparation of middle distillates appear to have unsatisfactory properties when such heavy nitrogen-containing feedstocks are used. The selectivity of these catalysts in converting heavy feedstocks to middle distillates is generally low, which means that a relatively large proportion of the feedstock is converted into low-boiling hydrocarbons such as gasoline. Furthermore the activity of these catalysts decreases in a relatively short time to an unacceptably low level, thus necessitating catalyst regeneration treatments which usually have a negative effect on total catalyst life. Moreover the conversion processes have to be stopped frequently in order to allow such treatments.

By middle distillates are understood hydrocarbon oil fractions with a boiling range entirely or substantially between 150 and 370°C. The middle distillates contain kerosene as well as gas oil components and can be fractionated into kerosene and gas oil by further distillation. By kerosene is understood a hydrocarbon oil fraction which boils substantially in a temperature range of from 150 to about 280°C, preferably from 180 to 260°C. By gas oil is understood a hydrocarbon oil which boils substantially in a temperature range of from 220 to 350°C (ASTM distillation).

It has now been found that certain sulphided supported catalysts comprising specific amounts of nickel, tungsten and fluorine exhibit both high selectivity for the preparation of middle distillates and high stability when a heavy hydrocarbon oil feedstock with a low nitrogen content is used, whilst the conversion at a given temperature to products boiling below 370°C is also high.

The invention therefore relates to a process for converting hydrocarbon oils to middle distillates by contacting a hydrocarbon oil at elevated temperature and pressure in the presence of hydrogen with a sulphided supported catalyst comprising nickel, tungsten and fluorine, characterized in that a hydrocarbon oil with a nitrogen content below 25 ppmw having a boiling range entirely or substantially above 350°C comprising 1—50% w of oil with an initial boiling point above 520°C, is contacted with a sulphided supported catalyst which comprises nickel and tungsten in a combined amount of 12.5—40% w and fluorine in an amount of 1—10% w, based on total catalyst.

Preferably the hydrocarbon oil used as feed comprises 1—30% w of a deasphalted residual oil with an initial boiling point above 520°C and 70—99% w of a flashed distillate with a boiling range entirely or substantially above 360°C. The use of hydrocarbon oils having an initial boiling point above 370°C is especially preferred. Good results can also be obtained using a flashed distillate as feed. The above-mentioned flashed distillate is normally obtained by subjecting a long residue (an atmospheric distillation residue of a crude mineral oil) to flash distillation, also called equilibrium distillation. The residual oil which can be used as part of the feed in the present process does not have to be derived from the same type of crude mineral oil as the flashed distillate. It is preferably obtained by distillation of a long residue at reduced pressure and subsequently removing asphalt from the remaining residue (known as short residue). Deasphalting can be carried out by treating the short residue with a low-boiling paraffinic hydrocarbon, such as ethane, propane, butane, pentane or a mixture thereof.

The preferred catalysts used in the process according to the present invention are those which comprise 20—25% w of tungsten, based on total catalyst, and in which catalysts the tungsten/nickel weight ratio lies between 3:1 and 6:1. Refractory oxides or mixtures thereof may be used as catalyst support, such as alumina, silica, silica-alumina, zirconia, magnesia and boria. The preferred catalyst support is alumina, containing less than 5% by weight of silica. Most preference is given to γ-alumina, containing less than 1% by weight of silica.

The metals may be incorporated by any method known in the art for the preparation of catalysts containing several components on a carrier, such as impregnation, ion-exchange or (co-)precipitation. A suitable method for preparing such catalysts is co-impregnation of the carrier material in one or more stages with an aqueous solution containing salts of tungsten and nickel.

The incorporation of fluorine into the catalyst may be carried out in two ways. Fluorine can be incorporated into the catalyst by impregnating the latter during or after the catalyst preparation with a suitable fluorine compound, such as ammonium fluoride. It is also possible to incorporate fluorine into the catalyst in situ in an early stage of the hydroconversion process for which the catalyst is used (for example during or after the start-up of the process). In situ fluoridation of the catalysts can be carried out by adding a suitable fluorine compound, such as o-fluorotoluene, or difluoroethane, to the gas and/or liquid stream

2

which is contacted with the catalyst. It is preferred to incorporate at least part of the fluorine into the catalyst by in situ fluoridation. Preferably the present catalysts comprise 4—7% by weight of fluorine, based on total catalyst. In order to maintain the fluorine content of the present catalyst at the desired level during the process according to the invention it is preferred to add intermittently or continuously to the hydrocarbon oil/hydrogen feed stream to the reactor an amount of fluorine compounds corresponding to 1—50, in particular 2—20, parts per million (by weight) of fluorine, calculated on the starting hydrocarbon oil. The catalysts which are used in the present process may also contain promotors such as boron and/or phosphorus.

The catalysts are used in the sulphidic form. The catalysts may be sulphided by any method known in the art for the sulphidation of catalysts, for example, by contacting the catalyst with a mixture of hydrogen and hydrogen sulphide or with hydrogen and a sulphur-containing hydrocarbon oil, such as a sulphur-containing gas oil. In the latter case the temperature is gradually raised to the level of the reaction temperature.

The process according to the invention may take place in the liquid phase or partly in the vapour-, partly in the liquid phase. Application of a fixed catalyst bed is preferred in the present process, but it is also possible to apply the catalyst in a fluidized or expanded bed. A very suitable embodiment is that in which the hydrocarbon oil to be converted, which is entirely or substantially in the liquid phase, is trickled downward co-currently with the hydrogen-containing gas through a fixed catalyst bed.

Suitable hydroconversion conditions for the process of the present invention are a temperature of 350—420°C, a total pressure of 75—200 bar, a partial hydrogen pressure of 60—200 bar, a space velocity of 0.4—1.5 kg oil/l catalyst/hour and a hydrogen feed rate of 250—2500 l (S.T.P)/kg oil feed. The conversion of hydrocarbon oils to middle distillates according to the present process is preferably carried out under the following conditions: a temperature of 360—410°C, a total pressure of 100—150 bar, a partial hydrogen pressure of 80—150 bar, a space velocity of 0.4—1.0 kg oil/l catalyst/hour and a hydrogen feed rate of 500—1500 l (S.T.P)/kg oil feed.

The hydrogen applied can be pure hydrogen or a hydrogen-containing gas, preferably comprising more than 70 vol.% of hydrogen, the hydrogen-containing gas may comprise up to 10 vol.% of hydrogen sulphide.

According to the process of the invention a hydrocarbon oil feed stream should be used containing less than 25 parts per million by weight (ppmw) of nitrogen, and preferably less than 10 ppmw of nitrogen which may be present completely or for the greater part in the form of organic nitrogen compounds. It is also preferred that the starting hydrocarbon oil contains less than 3, and most preferably less than 1, ppmw of vanadium and nickel combined. In some cases it may be necessary to subject the hydrocarbon oil to be converted to a demetallization pre-treatment in order to reach these levels. When the feed does not comply with the above requirement for the nitrogen content it will be necessary to subject the feed to a denitrogenation pre-treatment. Such a pre-treatment can be carried out by contacting a hydrocarbon oil with a nitrogen content above 25 ppmw, preferably having a boiling range entirely or substantially above 350°C, with a sulphided, fluorine-containing catalyst comprising nickel and molybdenum on a carrier. Refractory oxides may be used as catalyst support, the preferred support being gamma-alumina which contains less than 1% w of silica.

The preferred catalysts to be used in this pre-treatment comprise 1—5% w of nickel and 5—15% w of molybdenum, both percentages based on total catalyst. The preferred molybdenum:nickel weight ratio lies between 3:1 and 6:1. These metals may be incorporated into the catalyst by any method known in the art, for example by impregnation of alumina in one or more stages with an aqueous solution containing one or more salts of the metals concerned.

The catalysts to be used in the pre-treatment preferably contain 0.5—7, most preferably 3—7% w of fluorine, calculated on total catalyst. The incorporation of fluorine into these catalysts and their sulphiding may be carried out as described hereinbefore for the preparation of the catalysts used in the presently claimed process. The catalysts used in the pre-treatment may also contain promotors such as boron and/or phosphorus.

Suitable conditions for carrying out this pre-treatment are a temperature of 370—420°C, a total pressure of 65—220 bar, a partial hydrogen pressure of 60—200 bar, a space velocity of 0.2—2 kg oil/l catalyst/hour and a hydrogen feed rate of 250—2500 l (S.T.P)/kg oil.

The gas streams separated from the pre-treated feed, from the converted hydrocarbon oil, and the residual fraction separated from the middle distillates obtained, can all be partially or completely recycled.

The invention is illustrated by the following Example.

Example
Preparation of catalyst A

A $Ni/W/F/Al_2O_3$ catalyst with a pore volume of 0.4 ml/g and a specific surface area of 150 $m^2$/g containing 5.1% w of nickel, 23.8% w of tungsten and 5.5% w of fluorine, all based on total catalyst was prepared by impregnating an alumina carrier (comprising substantially $\gamma$-$Al_2O_3$), with a pore volume of 0.68 ml/g, a surface area of 250 $m^2$/g and a compacted bulk density of 0.66 g/ml, with an aqueous solution containing nickel nitrate and ammonium meta-tungstate in an amount equalling the total carrier pore volume. The impregnated alumina was dried in air and subsequently calcined at 650°C for 1.5 hours. The

3

product obtained was transferred to a reactor and sulphided in a flow of a sulphur-containing gas oil (1.5% w S) with gas recycle for 48 hours at 375°C, after which the reactor was cooled to 250°C for fluoriding the sulphided product in situ. The fluoriding procedure was carried out in the liquid phase using difluoroethane in gas oil (concentration equivalent to 300 ppmw fluorine).

Preparation of catalyst B

A Ni/Mo/P/F/Al$_2$O$_3$ catalyst with a pore volume of 0.4 ml/g and a specific surface area of 150 m$^2$/g containing 2.7% w of nickel, 13.2% w of molybdenum, 3.0% w of phosphorus and 6.0% w of fluorine, all based on total catalyst, was prepared by impregnating an alumina carrier, comprising substantially γ-alumina and having a pore volume of 0.76 ml/g; a surface area of 250 m$^2$/g and a compacted bulk density of 0.61 g/ml, with an aqueous solution comprising nickel nitrate, ammonium heptamolybdate and phosphoric acid in an amount equalling the total carrier pore volume. The impregnated alumina was dried in air and subsequently calcined at 450°C for 1.5 hours. The product obtained was transferred to a reactor and sulphided in a flow of a sulphur-containing gasoil (1.5% w S) with gas recycle for 48 hours at 375°C, after which the reactor was cooled to 250°C for fluoriding the sulphided product in situ. The fluoriding procedure was carried out in the liquid phase using difluoroethane in gasoil (concentration equivalent to 300 ppmw fluorine).

Pre-treatment

A hydrocarbon oil which was a blend of flashed distillates and deasphalted residual oils of Arabian and Iranian origins, had the following properties:

| elements: C | 85.41% w |
| H | 11.95% w |
| N | 0.13% w |
| S | 2.51% w |
| fraction boiling above 370°C | 98% w |
| fraction boiling above 520°C | 38% w |
| specific gravity | 0.899 kg/l |

This hydrocarbon oil could not be converted to middle distillates in one stage according to the presently claimed process because of the high nitrogen content of the oil, and was pre-treated in the presence of hydrogen and catalyst B.

The pre-treatment experiment 1 of which the conditions and the results are given in Table A below, was carried out on a pilot-plant scale in an adiabatic mode of operation using two reactor vessels in series, each having a volume of 1250 ml; the first of these reactors contained 450 ml (470 g) and the second one 950 ml (1095 g) of catalyst B in the form of 1.5 mm extrudates. The hydrocarbon oil was led downward through the reactors co-currently with the hydrogen-containing gas.

TABLE A

| Experiment No. | 1 |
| --- | --- |
| catalyst | B |
| space velocity (kg · l$^{-1}$ · h$^{-1}$) | 0.35 |
| cat. bed temperature (°C) | 380 |
| total pressure (bar) | 125 |
| partial hydrogen pressure (bar) | 122 |
| H$_2$ feed rate (l (S.T.P) H$_2$/kg oil) | 1250 |
| conversion to 370$^-$ prod. (%w) | 40 |

4

The fraction boiling substantially above 370°C (370$^+$) of the product obtained from Experiment had the following properties:

|  |  |
|---|---|
| composition: |  |
| elements: C | 86.03% w |
| H | 13.97% w |
| N | 4 ppmw |
| S | 50 ppmw |
| total metal content | <1 ppmw |
| fraction 370$^+$ | 98% w |
| fraction boiling above 520°C | 17% w |
| specific gravity | 0.819 kg/l |

This pre-treated hydrocarbon oil was led downward co-currently with hydrogen-containing gas through a 1250 ml reactor vessel, containing 980 ml (1234 g) of catalyst A in the form of 1.5 mm extrudates, in an adiabatic mode of operation.

The conditions at which Experiments 2—5 were carried out and the results obtained are given in Table B.

By "Conversion per pass (%w)" in Table B below is understood:

$$\frac{[\text{fraction } 370^+ \text{ in feed (\%w)}] - [\text{fraction } 370^+ \text{ in product (\%w)}]}{\text{fraction } 370^+ \text{ in feed (\%w)}} \times 100$$

"Selectivity to middle distillates" is defined as:

$$\frac{\text{fraction of middle distillates in product (\%w)}}{\text{fraction } 370^- \text{ in product (\%w)}} \times 100$$

By "fraction 370$^-$" is understood the fraction boiling below 370°C.

TABLE B

| Experiment No. | 2 | 3 | 4 | 5 |
|---|---|---|---|---|
| Catalyst | B | B | A | A |
| space velocity (kg · l$^{-1}$ · h$^{-1}$) | 0.5 | 0.7 | 0.5 | 0.7 |
| initial bed temperature (°C) | 375 | 380 | 365 | 370 |
| total pressure (bar) | 125 | 125 | 125 | 125 |
| Partial hydrogen pressure (bar) | 120 | 120 | 120 | 120 |
| Hydrogen feed rate (l (S.T.P) H$_2$/kg oil) | 1250 | 1250 | 1250 | 1250 |
| conversion per pass (%w) | 70 | 70 | 60 | 60 |
| Selectivity to middle distillates (%w) | 67 | 66 | 72 | 70 |
| Decline rate (°C/1000 h) | 10 | 52 | 5 | 16 |

Experiments 2 and 3 are comparative experiments, not according to the invention, because catalyst B does not contain tungsten. Experiments 4 and 5 are experiments according to the invention.

From Table B it can be concluded that at a given space velocity catalyst A is much more stable than catalyst B, because the decline rates (expressed as the necessary reactor temperature increase for

## 0 108 438

maintaining constant conversion, in °C per 1000 hours) are much lower for catalyst A than for catalyst B. Catalyst A also exhibits higher selectivity for the preparation of middle distillates than catalyst B.

### Claims

1. A process for converting hydrocarbon oils to middle distillates by contacting said oils at elevated temperature and pressure in the presence of hydrogen with a sulphided supported catalyst comprising nickel, tungsten and fluorine, characterized in that a hydrocarbon oil with a nitrogen content below 25 ppmw having a boiling range entirely or substantially above 350°C comprising 1—50% w of oil with an initial boiling point above 520°C, is contacted with a sulphided supported catalyst which comprises nickel and tungsten in a combined amount of 12.5—40% w and fluorine in an amount of 1—10% w, based on total catalyst.

2. A process according to claim 1, characterized in that a hydrocarbon oil is used comprising 1—30% w of a deasphalted residual oil with an initial boiling point above 520°C and 70—99% w of a flashed distillate with a boiling range entirely or substantially above 360°C.

3. A process according to claim 1 or 2, characterized in that a hydrocarbon oil is used having an initial boiling point above 370°C.

4. A process according to any one of claims 1—3, characterized in that a hydrocarbon oil is used having a nitrogen content below 10 ppmw.

5. A process according to any one of claims 1—4, characterized in that a hydrocarbon oil is used containing less than 3, and preferably less than 1, ppmw of vanadium and nickel combined.

### Patentansprüche

1. Ein Verfahren zum Umwandeln von Kohlenwasserstoffölen in Mitteldestillate durch Kontaktieren dieser Öle bei erhöhter Temperatur und erhöhtem Druck in Gegenwart von Wasserstoff mit einem sulfidierten Katalysator auf einer Trägersubstanz, welcher Nickel, Wolfram und Fluor enthält, dadurch gekennzeichnet, daß ein Kohlenwasserstofföl mit einem Stickstoffgehalt von unter 25 Gewichtsteilen pro Million mit einem ganz oder im wesentlichen über 350°C liegenden Siedepunkt, welches 1 bis 50 Gewichtsprozent Öl mit einem Anfangssiedepunkt über 520°C enthält, mit einem sulfidierten Katalysator auf einem Träger, welcher Katalysator Nickel und Wolfram in einer Gesamtmenge von 12,5 bis 40 Gewichtsprozent und Fluor in einer Menge von 1 bis 10 Gewichtsprozent, bezogen auf den Gesamtkatalysator enthält, kontaktiert wird.

2. Ein Verfahren gemäß Anspruch 1, dadurch gekennzeichnet, daß ein Kohlenwasserstofföl enthaltend 1 bis 30 Gewichtsprozent eines entasphaltierten Rückstandsöls mit einem Anfangssiedepunkt über 520°C und 70 bis 99 Gewichtsprozent eines Flashdestillats mit einem insgesamt oder im wesentlichen über 360°C liegenden Siedebereich verwendet wird.

3. Ein Verfahren gemäß Anspruch 1 oder 2, dadurch gekennzeichnet, daß ein Kohlenwasserstofföl mit einem Anfangssiedepunkt über 370°C verwendet wird.

4. Ein Verfahren gemäß einem der Ansprüche 1 bis 3, dadurch gekennzeichnet, daß ein Kohlenwasserstofföl mit eine Stickstoffgehalt unter 10 Gewichtsteilen pro Million verwendet wird.

5. Ein Verfahren gemäß einem der Ansprüche 1 bis 4, dadurch gekennzeichnet, daß ein Kohlenwasserstofföl enthaltend insgesamt weniger als 3 und vorzugsweise weniger als 1 Gewichtsteil(e) pro Million Vanadium und Nickel verwendet wird.

### Revendications

1. Un procédé pour la conversion d'huiles d'hydrocarbures en distillats moyens par mise en contact de ces huiles à température et pression élevées en présence d'hydrogène avec un catalyseur supporté sulfuré comprenant du nickel, du tungstène et du fluor, caractérisé en ce qu'une huile d'hydrocarbures d'une teneur en azote inférieure à 25 ppm en poids ayant un intervalle d'ébullition entièrement ou essentiellement au-dessus de 350°C comprenant 1—50% en poids d'huile d'un point initial d'ébullition au-dessus de 520°C est mise en contact avec un catalyseur supporté sulfuré qui comprend du nickel et du tungstène dans une quantité combinée de 12,5—40% en poids et du fluor dans une quantité de 1—10% en poids, par rapport au catalyseur total.

2. Un procédé selon la revendication 1, caractérisé en ce qu'on utilise une huile d'hydrocarbures comprenant 1—30% en poids d'une huile résiduelle désasphaltée ayant un point initial d'ébullition au-dessus de 520°C et 70—99% en poids d'un distillat de vaporisation-éclair ayant un intervalle d'ébullition entièrement ou essentiellement au-dessus de 360°C.

3. Un procédé selon la revendication 1 ou 2, caractérisé en ce qu'on utilise une huile d'hydrocarbures ayant un point initial au-dessus de 370°C.

4. Un procédé selon l'une quelconque des revendications 1—3, caractérisé en ce qu'on utilise une huile d'hydrocarbures ayant une teneur en azote inférieure à 10 ppm en poids.

5. Un procédé selon l'une quelconque des revendications 1—4, caractérisé en ce qu'on utilise une huile d'hydrocarbures contenant moins de 3, et de préférence moins de 1 ppm en poids de vanadium et de nickel combinés.

6